# EUROPEAN PATENT SPECIFICATION

(11) **EP 0 351 134 B1**
(45) Date of publication and mention of the grant of the patent: **17.11.1994**
(21) Application number: 89306863.5
(22) Date of filing: 06.07.1989
(51) Int. Cl.: C04B 35/80, C04B 35/10, C04B 35/64, B32B 27/14

(54) **A ceramics cutting tool and a process for the production of the same**
Keramisches Schneidwerkzeug und Verfahren zu seiner Herstellung
Outil de coupe en céramique et procédé de fabrication de celui-ci

(30) Priority: 11.07.1988 JP 173122/88
(43) Date of publication of application: 17.01.1990
(73) Proprietor: SUMITOMO ELECTRIC INDUSTRIES, LTD., Osaka-shi, Osaka 541 (JP)
(72) Inventor: Tobioka, Masaaki Itami Works of Sumitomo Electric, Itami-shi Hyogo-ken (JP); Moriguchi, Hideki Itami Works of Sumitomo Electric, Itami-shi Hyogo-ken (JP)
(74) Representative: Cross, Rupert Edward Blount

(56) References cited:
- EP-A- 0 208 910
- EP-A- 0 295 228
- DE-A- 3 616 572
- US-A- 4 657 877
- US-A- 4 749 667

## Description

This invention relates to a ceramic cutting tool excellent in toughness and wear resistance and a process for the production of the same.

Al₂O₃ ceramics are ideal materials for cutting tools, in particular, used at a high speed because of their excellent oxidation resistance, high heat resistance, high hardness at a high temperature and low reactivity with iron. However, Al₂O₃ ceramics have the fatal disadvantage that the breakage resistance is inferior as a cutting tool because of their insufficient strength and toughness and the application range is considerably limited.

For the development of cutting tools of Al₂O₃ ceramics, it is the most important problem how the breakage resistance is improved. Firstly, it has been proposed to improve the thermal toughness by adding TiC to Al₂O₃ ceramics and the resulting compositions have been put to practical use for cutting castings at high speeds or for cutting high hardness materials such as hardened steels.

Furthermore, in DE-A-2,744,700, it is disclosed that strengthening or toughening of ceramics cutting tools is carried out by utilizing the crack propagation effect of microcracks due to the volume expansion following the modification of tetragonal system to monoclinic system of ZrO₂ dispersed in Al₂O₃ matrix, and in DE-A-2,549,652, it is disclosed that in ZrO₂-containing ceramics, strengthening of the matrix is carried out by absorbing the crack propagation energy through microcracks previously introduced thereinto by the phase modification of ZrO₂.

It has also been proposed as disclosed in Japanese Patent Publication No. 19391/1987 and Re 32843 to strengthen ceramics by the moderation of stress concentration at the crack points through bridging of the upper and lower surfaces of cracks with crack propagation by SiC whiskers dispersed in Al₂O₃ matrix i.e. by the so-called whisker pull out effect. In Japanese Patent Laid-Open Publication No. 174165/1986 and US Patent No. 4,789,277, use of Al₂O₃-SiC whisker-ceramics as a cutting tool has been proposed.

Japanese Patent Laid-Open Publication No. 270266/1986 describes that ceramics with a higher strength and higher K_{IC} can be obtained by adding SiC whiskers and ZrO₂ to Al₂O₃ to result in synergistic strengthening and Japanese Patent Laid-Open Publication No. 45182/1988 discloses higher strength and higher hardness ceramics sintered bodies consisting of Al₂O₃-SiC whisker-ZrO₂ ceramics, in which Al₂O₃ and ZrO₂ are in a proportion by volume of 62 : 38 to 72 : 28 and Al₂O₃ grains have a grain size of at most 1.0 µm.

Al₂O₃-TiC ceramics cutting tools are somewhat improved in toughness and, in particular, thermal shock resistance in comparison with Al₂O₃ ceramics cutting tools and at the present time, have been regarded as a standard material for ceramics cutting tools. However, this improvement being insufficient, the Al₂O₃-TiC ceramics cutting tools can only be used in largely limited fields, i.e. for cutting low cutting resistance materials such as castings or for finish-cutting with a small fluctuation of cut depth in the case of high hardness materials such as heat resisting steels.

Al₂O₃-ZrO₂ ceramics cutting tools have much more improved toughness, for example, about 1.5 times large K_{IC} than Al₂O₃ ceramics cutting tools and accordingly, a part of them has been used for high speed cutting of steels. However, the wear resistance of the Al₂O₃-ZrO₂ ceramics cutting tools is inferior to that of the Al₂O₃-TiC ceramics cutting tools, because addition of ZrO₂ to Al₂O₃ results in lowering of the hardness thereof, and accordingly, the Al₂O₃-ZrO₂ ceramics cutting tools have found no use for hard-to-cut materials such as heat resisting steels. When ZrO₂ is added, furthermore, K_{IC} is improved, but the transverse rupture strength is lowered.

On the other hand, Al₂O₃-SiC whisker-ceramics cutting tools are more improved in hardness, K_{IC} and transverse rupture strength as compared with the Al₂O₃-TiC ceramics cutting tools and have been regarded as available for cutting heat resisting materials such as Inconel. When these cutting tools are in fact used for cutting such a heat resisting material as Inconel, in particular, at a high speed such as at least 100 m/min, however, the boundary notch is remarkably progressing in the ceramics, thus resulting in a very short life thereof. This is probably due to that the Al₂O₃-SiC whisker-ceramics cutting tools are not so improved in K_{IC} as the Al₂O₃-TiC ceramics cutting tools.

With respect to this point, Al₂O₃-SiC whisker-ZrO ceramics cutting tools are surely given a higher hardness and higher K_{IC} than the Al₂O₃-TiC ceramics cutting tools, but this is not satisfactory for use under severer conditions, for example, for cutting the heat resisting materials such as Inconel. That is, the progress of the boundary notch is not sufficiently suppressed in the ceramics and their lives are short so that the tools are not put to practical use.

When the Al₂O₃-SiC whisker-ceramics cutting tools and Al₂O₃-SiC whisker-ZrO₂ ceramics cutting tools are used for cutting castings, they exhibit a sufficient breakage resistance attaining the level, but the wear resistance thereof cannot be rendered optimum.

US-A-4657877 discloses ceramic articles for heat engine components made of Al₂O₃ and SiC whiskers with ZrO₂. Above 12 vol% ZrO₂_{,} typically 20 vol%, is said to be required to show increase in fracture toughness.

US-A-4749667 teaches ceramic articles made of Al₂O₃ and SiC whiskers with ZrO₂, in which there must be between 35 and 45 vol% SiC whiskers for good hardness and toughness.

EP-A-0208910 discloses a wide range of formulations of alumina ceramic materials reinforced with SiC whiskers for cutting tools. ZrO₂ is disclosed as one of a wide range of possible additives to materials comprising essentially SiC whiskers, Al₂O₃ and a sintering assistant. In particular one example is disclosed consisting of 60wt% Al₂O₃, 25wt% MgO and 1wt% YB₆. More generally, this document discloses compositions with additives in addition to sintering assistants, these additives comprising any of B, C, AlN, B₄C and boride of Si, Al, Y, lanthanide, a transition metal belong to Group IVa Va and VIa of the Peridic Table of the Elements or oxide, carbide, nitride, boride thereof including solid solution thereof.

EP-A-0295228 discloses a Al₂O₃-SiC whisker- ZrO₂ cutting tool with a possible further addition of Cr₂O₃.

It is an object of the present invention to provide a ceramics cutting tool excellent in toughness as well as wear resistance.

Examples of the present invention provide an Al₂O₃-SiC whisker-ZrO₂ ceramics cutting tool having excellent properties, in which the ceramics is rendered as compact as possible in a range wherein Al₂O₃ is not subject to grain growth by adjusting the amounts of SiC whiskers and ZrO₂ to optimum and controlling precisely the producing conditions.

The present invention provides an Al₂O₃ - SiC whiskers - ZrO₂ ceramic cutting tool comprising 27 to 32% by volume of SiC whiskers, 3 to 7 % by volume of partially stabilised ZrO₂, at least one sintering aid selected from the group consisting of MgO, Y₂O₃ and NiO and the balance of Al₂O₃, said Al₂O₃, having a mean grain diameter of at most 1.5 µm.

The accompanying drawings are to illustrate the merits and principle of the present invention in detail.

Fig. 1 is a graph showing the relationship between the boundary notch V_{N} and the amount of ZrO₂ in a ceramics cutting tool of Al₂O₃-SiC whiskers-ZrO₂ system containing 30 vol % of SiC whiskers when cutting Inconel 718.

Fig. 2 is a graph showing the relationship between the hot pressing temperature and boundary notch V_{N} when cutting Inconel 718 using a ceramics cutting tool of 32 vol % of SiC whiskers, 5 vol % of ZrO₂ containing 3wt% of Y₂O₃ and the balance of Al₂O₃.

The inventors have made various efforts to provide an improved Al₂O₃-SiC whisker-ZrO₂ ceramics cutting tool, whereby the disadvantages of the ceramics cutting tool of the prior art can be overcome and consequently, have found that such an improved ceramics cutting tool can be produced by controlling precisely the producing conditions.

Accordingly, an Al₂O₃-SiC whisker-ZrO₂ ceramic cutting tool should comprise 27 to 32 vol % of SiC whiskers, 3 to 7 vol % of partially stabilised ZrO₂ and the balance of Al₂O₃ having a mean grain diameter of at most 1.5 µm. This ceramics cutting tool can be produced by hot pressing a mixed powder of Al₂O₃, SiC whiskers ZrO₂ and sintering aid(s) at a temperature of 1500 to 1750 °C under a pressure of 150 to 500 kg/cm² for a period of time of 30 minutes to 5 hours, or by hot pressing a mixed powder of Al₂O₃, SiC whiskers ZrO₂ and sintering aid(s) at a temperature of 1450 to 1750 °C under a pressure of 10 to 500 kg/cm² for a period of time of 30 minutes to 5 hours and then subjecting the mixture to a hot hydrostatic pressure treatment at a temperature of 1500 to 1800 °C under a pressure of 10 to 3000 atm (1 x 10⁶ to 3 x 10⁸ Pa) for a period of time of 30 minutes to 5 hours. Preferably, the SiC whiskers have an aspect ratio of 3 to 200.

If the amount of SiC whiskers is less than 27 vol %, increase of the strength is not sufficient, in particular, when cutting heat resisting materials such as Inconel, while if more than 32 vol %, the amount of Al₂O₃ is decreased relatively to lower the wear resistance. This should be avoided. If the amount of ZrO₂ is less than 3 vol %, increase of K_{IC} is not sufficient in comparison with the Al₂O₃ ceramics, while if more than 12 vol %, the strength of the ceramics is lowered and the wear resistance during cutting is also deteriorated. More preferably, ZrO₂ is in the range of 3 to 7% by volume.

In the ceramic composition of the present invention, Al₂O₃ grains have a mean grain diameter of at most 1.5 µm, since if the grain diameter exceeds 1.5 µm, the wear resistance is largely decreased when it is used as a cutting tool. The sintering property of the Al₂O₃-SiC whisker ceramic with low sintering property can be improved by adding ZrO₂ to render it possible to lower the sintering temperature. Thus, the mean grain diameter of Al₂O₃ can be controlled to at most 1.5 µm to improve the wear resistance to a greater extent.

In the ordinary sintering at normal pressure, compacting of such ceramics is not sufficient enough to resist practical use as a cutting tool. On the other hand, in preferred embodiments of the present invention, a mixture of Al₂O₃ powder, SiC whiskers ZrO₂ powder and sintering aid(s) is hot pressed, or after the hot pressing, it is subjected to a hot isostatic press (HIP) treatment.

When the hot pressing is carried out without the hot isostatic press treatment, at a temperature of lower than 1500 °C, compacting is insufficient, while at a temperature of higher than 1750 °C, Al₂O₃ is subject to excessive grain growth to lower the wear resistance. When the sintering is carried out for a time of longer than 5 hours, Al₂O₃ is also subject to excessive grain growth to lower the wear resistance, while when shorter than 30 minutes, compacting is insufficient. If the pressure for the hot pressing is less than 150 kg/cm², compacting is insufficient and even if more than 500 kg/cm², the effect is not so increased and this is meaningless on commercial scale.

The hot isostatic press treatment should be carried out after converting pores in the ceramics sintered compact into cellular pores by the compressing and sintering. To this end, the hot pressing should be at a temperature of 1450 °C or higher, since if lower than 1450 °C, pores in the ceramics sintered compact are not converted into cellular pores, but are retained as open pores. Thus, compacting cannot sufficiently be obtained by the hot isostatic press treatment. If the hot pressing is carried out at a temperature of higher than 1750 °C, Al₂O₃ is subject to excessive grain growth. This is not preferable. If the time is shorter than 30 minutes, pores in the ceramics sintered compact are not converted into cellular pores, but are retained as open pores and compacting cannot sufficiently be obtained by the hot isostatic press treatment, while if longer than 5 hours, Al₂O₃ is subject to excessive grain growth.

For the purpose of converting pores in the ceramics sintered compact into cellular pores by the hot pressing, a pressure of less than 10 kg/cm² is insufficient and even a pressure of more than 500 kg/cm² does not result in more effects. This is meaningless on commercial scale.

As to the hot isostatic press treatment, a temperature of lower than 1500 °C, a pressure of less than 1x10⁶ Pa (10 atm) and a time of less than 30 minutes are insufficient for compacting of the ceramics, while a temperature of higher than 1800 °C and a time of longer than 5 hours result in excessive growth of Al₂O₃ and a pressure of more than 3x10⁸ Pa (3000 atm) does not result in more effects.

Furthermore, sintering aids well known as those of the Al₂O₃ ceramics, such as MgO, Y₂O₃ and NiO, are added. ZrO₂ partially stabilized with Y₂O₃, CaO, HfO₂, etc. is used as a starting powder.

The following examples are given in order to illustrate the present invention in detail without limiting the same, in which parts and percents are to be taken as those by weight unless otherwise indicated.

### Example 1

A mixed powder of 63 % by volume of α-Al₂O₃ with a mean grain diameter of 1 µm or less, 5 % by volume of ZrO₂ partially stabilized with 3 % of Y₂O₃ and 32 % by volume of SiC whiskers with a mean diameter of 0.6 µm and an aspect ratio of 5 to 50 was adequately and uniformly dispersed in ethanol using ultrasonic wave and dried. The resulting mixed powder was shaped in about 100 mm (diameter) x 6 mm using a dry bag and then hot pressed for 1 hour at a temperature of 1650 °C and a pressure of 400 kg/cm² in a vacuum of 1 Pa using a hot pressing metal mold of C/C composite. From the thus resulting sintered body was got a cutting insert (Sample A) of Form No. SNGN 120408 and then subjected to polishing. For comparison, there were used a commercially available Al₂O₃-TiC ceramics cutting tool (NB 90S -commercial name-, manufactured by X Co., Sample B), Al₂O₃-ZrO₂ ceramics cutting tool (SN 60 -commercial name-, manufactured by Y Co., Sample C), Si₃N₄ ceramics cutting tool (NS 130 -commercial name-, manufactured by Sumitomo Electric Industries, Ltd., Sample D) and Al₂O₃-SiC whisker-ceramics cutting tool (WG 300 -commercial name-, manufactured by Z Co., Sample E).

These samples were subjected to cutting tests under the following conditions:

### Cutting Conditions 1

| | |
|---|---|
| Workpiece to be cut | Inconel 718 (commercial name, aged after solution treatment) |
| Cutting Speed | 100 m/min |
| Feed | 0.15 mm/rev |
| Cutting Depth | 2 mm |
| Insert Form No. | SNGN 120408 |
| Holder | FN 11R-44A |
| Cutting Agent | no |

The results are as follows:
- Sample B:: boundary breakage when cutting for 12 seconds
- Sample C:: melt down of insert edge when cutting for 21 seconds
Sample D, E and A were resistant to cutting for 1 minute to give the following results:

| | Flank Wear Width (V_{B}) (mm) | Boundary Notch (V_{N}) (mm) |
|---|---|---|
| Sample D | 0.38 | 0.52 |
| Sample E | 0.12 | 0.55 |
| Sample A | 0.13 | 0.18 |

Similarly, the above described samples were subjected to cutting tests under the following conditions:

### Cutting Conditions 2

| | |
|---|---|
| Workpiece | FC 30 |
| Cutting Speed | 350 m/min |
| Feed | 0.15 mm/tooth |
| Cutting Depth | 2 mm |
| Insert Form No. | SNGN 120408 |
| Cutter | DNF 4160 R (one edge) |
| Cutting Agent | no |

The results are summarized below:
- Sample A:: V_{B} (mean value) 0.13 mm after cutting for 30 minutes
- Sample B:: broken when cutting for 4 minutes 38 seconds
- Sample C:: melt down of insert edge when cutting for 4 min 18 sec
- Sample D:: V_{B} (mean value) 0.31 mm after cutting for 30 min
- Sample E:: V_{B} (mean value) 0.23 mm after cutting for 30 min

### Example 2

Ceramics cutting tools shown in Table 1 were prepared by the same method as that of obtaining Sample A in Example 1 and then subjected to cutting tests under Cutting Conditions 1 of Example 1.

**Table 1**

| Sample | Al₂O₃ (vol %) | SiC Whisker (vol %) | ZrO₂ (vol%) | Flank Wear Width V_{B} (mm) | Boundary Notch V_{N} (mm) |
|---|---|---|---|---|---|
| F | 70 | 25 | 5 | 0.20 | 0.79 |
| G | 60 | 35 | 5 | 0.14 | 0.20 |
| H | 58 | 37 | 5 | 0.25 | 0.27 |
| I | 70 | 30 | 0 | 0.23 | 0.98 |
| J | 63 | 30 | 7 | 0.14 | 0.17 |
| K | 56 | 30 | 14 | 0.31 | 0.41 |
| L | 63 | 27 | 10 | 0.14 | 0.25 |
| M | 58 | 32 | 10 | 0.15 | 0.19 |
| N | 95 | 0 | 5 | life: at most 1 sec | |
| O | 40 | 50 | 10 | life: at most 1 sec | |
| Note: Sample J according to Present Invention | | | | | |

### Example 3

Ceramics cutting tools having the same composition as Sample A obtained in Example 1 were prepared by the conditions shown in Table 2 and then subjected to cutting tests under Cutting Conditions 1 of Example 1, thus obtaining results shown in Table 2.

To examine the effect of the hot hydrostatic pressure treatment, a ceramics cutting tool having the same composition as Sample A was compressed and sintered at 1600 °C and 100 kg/cm² for 40 minutes and then subjected to hot hydrostatic pressure treatments under various conditions. The treatment conditions and test results under Cutting Conditions 1 are shown in Table 3.

When the hot pressing conditions prior to the hot isostatic pressing treatment were examined with respect to various points, at a temperature of lower than 1500 °C the same result was obtained as in the case of Sample 10 and at a pressure of less than 10 kg/cm² or in a time of shorter than 30 minutes, the lives of the tools were at most 30 seconds. When the temperature was higher than 1800 °C or the time was longer than 5 hours, the lives of the tools were at most 30 seconds, because Al₂O₃ was subject to excessive grain growth after the hot hydrostatic pressure treatment.

**Table 2**

| Hot Pressing Conditions and Cutting Test Results | | | | | |
|---|---|---|---|---|---|
| Sample | Hot Pressing Temperature (°C) | Hot Pressing Pressure (kg/cm²) | Hot Pressing Time (hr) | Flank Wear Width V_{B} (mm) | Boundary Notch V_{N} (mm) |
| P | 1400 | 400 | 1 | life: 8 sec | |
| Q | 1600 | 400 | 1 | 0.12 | 0.29 |
| R | 1750 | 400 | 1 | 0.17 | 0.24 |
| S | 2100 | 400 | 1 | life: 19 sec | |
| T | 1750 | 400 | 0.25 | life: at most 1 sec | |
| U | 1750 | 400 | 7 | life: 11 sec | |
| V | 1750 | 100 | 1 | life: 58 sec | |
| W | 1750 | 600 | 1 | 0.17 | 0.37 |
| X | 1700 | 400 | 1 | 0.13 | 0.15 |
| Note: Samples Q, R and X according to Present Invention | | | | | |

**Table 3**

| Hot Isostatic Press Treatment Conditions and Cutting Test Results | | | | | |
|---|---|---|---|---|---|
| Sample | Temperature (°C) | Pressure (Pa)(Atm) | Time (hr) | Flank Wear Width V_{B} (mm) | Boundary Notch V_{N} (mm) |
| 1 | 1400 | 1x10⁸ (1000) | 1 | life: at most 1 | |
| 2 | 1700 | 1x10⁸ (1000) | 1 | 0.10 | 0.13 |
| 3 | 1800 | 1x10⁸ (1000) | 1 | 0.25 | 0.29 |
| 4 | 1700 | 5x10⁵ (5) | 1 | life: 5 seconds | |
| 5 | 1700 | 1x10⁸ (1000) | 0.25 | life: 11 seconds | |
| 6 | 1700 | 1x10⁸ (1000) | 7 | life: 19 seconds | |
| 7 | 1900 | 1x10⁸ (1000) | 1 | life: 21 seconds | |
| 8 | 1500 | 1x10⁸ (1000) | 1 | 0.14 | 0.21 |
| 9 | no treatment | | | life: at most 1 sec | |
| Note: Samples 2, 3 and 8 according to Present Invention | | | | | |

### Example 4

Sample A and Samples F to X were further subjected to cutting tests under the following conditions:

### Cutting Conditions 3

| | |
|---|---|
| Workpiece | FC 25 |
| Cutting Speed | 300 m/min |
| Feed | 0.4 mm/rev |
| Cutting Depth | 1.5 mm |
| Insert Form No. | SNGN 120408 |
| Holder | FN 11 R - 44A |
| Cutting Oil | dry |
| Cutting Time | 10 minutes |

The results are shown in Table 4:

**Table 4**

| Sample | Flank Wear Width V_{B} (mm) | Boundary Notch V_{N} (mm) | Al₂O₃ Mean Grain Diameter (µm) |
|---|---|---|---|
| A | 0.13 | 0.18 | 0.8 |
| F | 0.14 | 0.19 | 0.8 |
| G | 0.14 | 0.23 | 0.8 |
| H | 0.20 | 0.22 | 0.8 |
| I | 0.21 | 0.37 | 0.8 |
| J | 0.14 | 0.18 | 0.8 |
| K | 0.22 | 0.20 | 0.8 |
| L | 0.14 | 0.19 | 0.8 |
| M | 0.15 | 0.18 | 0.8 |
| N | 0.17 | 0.55 | 0.8 |
| O | 0.24 | 0.48 | 0.8 |
| P | 0.22 | 0.35 | 0.6 |
| Q | 0.15 | 0.22 | 0.7 |
| R | 0.16 | 0.20 | 1.4 |
| S | 0.20 | 0.38 | 3.0 |
| T | 0.17 | 0.35 | 0.7 |
| U | 0.19 | 0.33 | 2.1 |
| V | 0.17 | 0.37 | 1.4 |
| W | 0.17 | 0.20 | 1.4 |
| X | 0.13 | 0.19 | 1.0 |
| Note: Samples J, Q, R and X according to Present Invention; Al₂O₃ Mean Grain Diameter: measured by observation of SEM | | | |

### Example 5

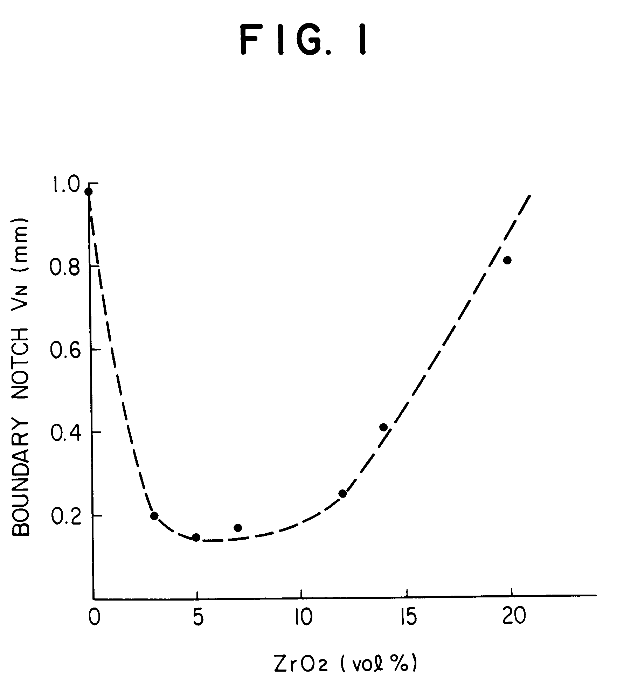

Ceramics cutting tools each having a composition comprising 30 % by volume (as constant amount) of SiC whiskers with a mean with a mean diameter of 0.6 µm and an aspect ratio of 5 to 50, 0 to 20 % by volume of ZrO₂ partially stabilized with 3 % of HfO₂ and the balance of α-Al₂O₃, as shown in Table 5, were prepared under the same conditions as those of Example 1, and then subjected to cutting tests under Cutting Conditions 1 of Example 1, thus obtaining results shown in Fig. 1 in which there is given a relationship between the amount of ZrO₂ and boundary notch.

**Table 5**

| Sample | SiC Whiskers (vol %) | ZrO₂ (vol %) | Al₂O₃ (vol %) | Boundary Notch V_{N} (mm) |
|---|---|---|---|---|
| 10 | 30 | 0 | 70 | 0.98 |
| 11 | 30 | 3 | 67 | 0.20 |
| 12 | 30 | 5 | 65 | 0.15 |
| 13 | 30 | 7 | 63 | 0.17 |
| 14 | 30 | 12 | 58 | 0.25 |
| 15 | 30 | 14 | 56 | 0.41 |
| 16 | 30 | 20 | 50 | 0.81 |
| Note: Samples 11 to 13 according to Present Invention | | | | |

### Example 6

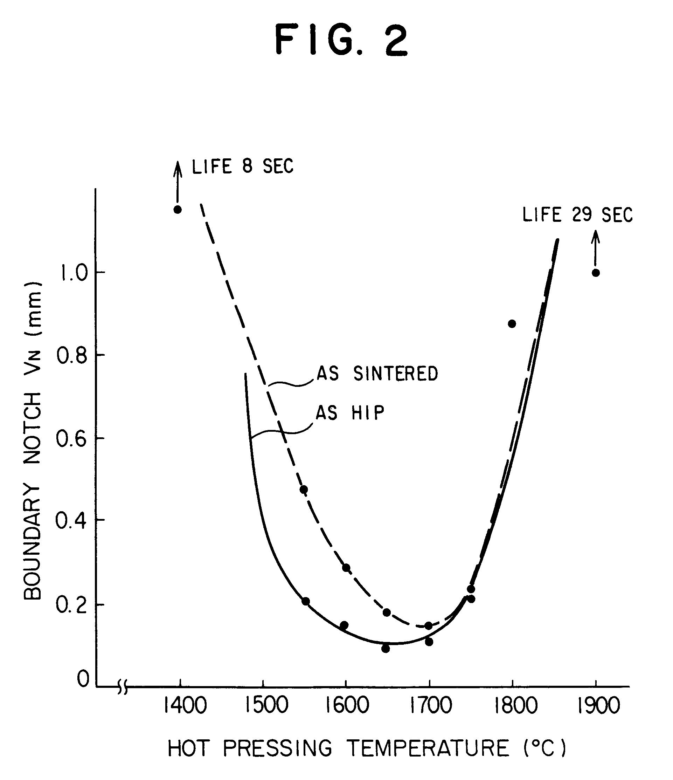

Ceramics cutting tools having the same compositions as Sample A obtained in Example 1 were prepared by the conditions shown in Table 6 and then subjected to cutting tests under Cutting Condition 1 of Example 1, thus obtaining results shown in Fig. 2, in which there is given a relationship between the hot pressing temperature and boundary notch V_{N}.

**Table 6**

| Sample | Hot Pressing Temperature (°C) | Hot Pressing Pressure (kg/cm²) | Hot Pressing Time (hr) | Mean Grain Size of Al₂O₃ (µm) | Boundary Notch V_{N} (mm) | Boundary Notch V_{N} After HIP (mm) |
|---|---|---|---|---|---|---|
| 17 | 1400 | 400 | 1 | 0.6 | tool life 8 sec | |
| 18 | 1550 | 400 | 1 | 0.6 | 0.48 | 0.2 |
| 19 | 1600 | 400 | 1 | 0.7 | 0.29 | 0.15 |
| 20 | 1650 | 400 | 1 | 0.8 | 0.18 | 0.10 |
| 21 | 1700 | 400 | 1 | 1.0 | 0.15 | 0.13 |
| 22 | 1750 | 400 | 1 | 1.4 | 0.24 | 0.24 |
| 23 | 1800 | 400 | 1 | 1.7 | 0.88 | 0.88 |
| 24 | 1900 | 400 | 1 | 2.3 | tool life 29 sec | tool life 21 sec |
| Note: Samples 18 to 22 Present Invention | | | | | | |

The thus resulting sintered bodies were subjected to a HIP treatment in Ar at 1600 °C and 1500 atm for 1 hour to prepare cutting inserts, which were then subjected to cutting tests in an analogous manner to Example 1 for comparison with those before the HIP treatment. The results are shown in Table 6 and Fig. 2.

It will clearly be understood from the results of Examples that the ceramics cutting tools of the present invention are excellent in toughness as well as wear resistance.

## Claims

1. An Al₂O₃ - SiC whiskers - ZrO₂ ceramic cutting tool comprising 27 to 32% by volume of SiC whiskers, 3 to 7 % by volume of partially stabilised ZrO₂, at least one sintering aid selected from the group consisting of MgO, Y₂O₃ and NiO and the balance of Al₂O₃, said Al₂O₃, having a mean grain diameter of at most 1.5 µm.

2. A process for the production of the Al₂O₃-SiC whisker-ZrO₂ ceramic cutting tool as claimed in Claim 1, which comprises hot pressing a mixed powder of the Al₂O₃, SiC whiskers, ZrO₂ and sintering aid at a temperature of 1500 to 1750 °C under a pressure of 150 to 500 kg/cm² for a period of time of 30 minutes to 5 hours.

3. A process for the production of the Al₂O₃-SiC whiskers-ZrO₂ ceramic cutting tool as claimed in Claim 1, which comprises hot pressing a mixed powder of the Al₂O₃, SiC whiskers, ZrO₂ and sintering aid at a temperature of 1450 to 1750 °C under a pressure of 10 to 500 kg/cm² for a period of time of 30 minutes to 5 hours and then subjecting the mixture to a hot isostatic press treatment at a temperature of 1500 to 1800 °C under a pressure of 10 to 3000 atm for a period of time of 30 minutes to 5 hours.

4. The process as claimed in either of Claims 2 or 3, wherein ZrO₂ is partially stabilized with at least one compound selected from the group consisting of Y₂O₃, CaO and HfO₂.

## Patentansprüche

1. Spanabhebendes Al₂O₃ - SiC-Whiskers - ZrO₂ - Keramikwerkzeug, welches 27 bis 32 Vol.-% SiC-Whiskers, 3 bis 7 Vol.-% teilweise stabilisiertes ZrO₂ und mindestens ein aus der aus MgO, Y₂O₃ und NiO bestehenden Gruppe sowie der zu ergänzenden Restmenge von Al₂O₃ ausgewähltes Sinterhilfsmittel umfaßt, wobei das Al₂O₃ einen mittleren Korngrößendurchmesser von höchstens 1,5 µm aufweist.

2. Verfahren zur Herstellung des spanabhebenden Al₂O₃ - SiC-Whiskers - ZrO₂ - Keramikwerkzeugs gemäß Anspruch 1, welches die Warmpressung eines Pulvergemisches aus Al₂O₃, SiC-Whiskers, ZrO₂ sowie einem Sinterhilfsmittel bei einer Temperatur von 1500 bis 1750 °C und einem Druck von 150 bis 500 kg/cm² für eine Zeitspanne von 30 Minuten bis 5 Stunden umfaßt.

3. Verfahren zur Herstellung des spanabhebenden Al₂O₃ - SiC-Whiskers - ZrO₂ - Keramikwerkzeugs gemäß Anspruch 1, welches die Warmpressung eines Pulvergemisches aus Al₂O₃, SiC-Whiskers, ZrO₂ sowie einem Sinterhilfsmittel bei einer Temperatur zwischen 1650 °C und 1750 °C und einem Druck von 10 bis 500 kg/cm² über eine Zeitspanne von 30 Minuten bis 5 Stunden sowie die daran anschließende Maßnahme umfaßt, daß man das Gemisch einer isostatischen Warmpreßbehandlung bei einer Temperatur zwischen 1500 °C und 1800 °C und einem Druck von 10 bis 3000 Atmosphären über eine Zeitspanne von 30 Minuten bis 5 Stunden unterwirft.

4. Verfahren gemäß einem der Ansprüche 2 oder 3, bei dem das ZrO₂ teilweise mit mindestens einer Verbindung stabilisiert ist, welche aus der aus Y₂O₃, CaO und HfO₂ bestehenden Gruppe ausgewählt ist.

## Revendications

1. Outil de coupe en céramique à base de Al₂O₃ - whiskers de SiC - ZrO₂ comprenant 27 à 32% en volume de whiskers de SiC, 3 à 7% en volume de ZrO₂ partiellement stabilisé, au moins adjuvant de frittage choisi dans le groupe comprenant MgO, Y₂O₃ et NiO et le restant en Al₂O₃, ladite Al₂O₃ ayant un diamètre de grain moyen de tout au plus 1,5 µm.

2. Procédé de production de l'outil de coupe en céramique à base de Al₂O₃ - whiskers de SiC - ZrO₂ suivant la revendication 1, qui comprend la compression à chaud d'une poudre mixte des Al₂O₃, whiskers de SiC, ZrO₂ et adjuvant de frittage à une température de 1500 à 1750°C sous une pression de 150 à 500 kg/cm² pendant une période de 30 minutes à 5 heures.

3. Procédé de production de l'outil de coupe en céramique à base de Al₂O₃ - whiskers de SiC - ZrO₂ suivant la revendication 1, qui comprend la compression à chaud d'une poudre mixte des Al₂O₃, whiskers de SiC, ZrO₂ et adjuvant de frittage à une température de 1450 à 1750°C sous une pression de 10 à 500 kg/cm² pendant une période de temps de 30 minutes à 5 heures et ensuite le traitement du mélange par une presse isostatique chaude à une température de 1500 à 1800°C sous une pression de 10 à 3000 atm pendant une période de temps de 30 minutes à 5 heures.

4. Procédé suivant l'une ou l'autre des revendications 2 et 3, dans lequel le ZrO₂ est partiellement stabilisé avec au moins un composé choisi dans le groupe comprenant Y₂O₃, CaO et HfO₂.
